# EUROPÄISCHE PATENTSCHRIFT

(11) **EP 3 078 769 B1**
(45) Veröffentlichungstag und Bekanntmachung des Hinweises auf die Patenterteilung: **05.09.2018**
(21) Anmeldenummer: 16164288.9
(22) Anmeldetag: 07.04.2016
(51) Int. Cl.: D01H 1/20, G05B 19/4155

(54) **VERFAHREN ZUR FREIGABE VON MASCHINENFUNKTIONEN AN EINER SPINNEREIMASCHINE**
METHOD FOR RELEASING MACHINE FUNCTIONS ON A SPINNING MACHINE
PROCÉDÉ DE VALIDATION DE FONCTIONS DE MACHINE DANS UN MÉTIER À FILER

(30) Priorität: 08.04.2015 DE 102015105322
(43) Veröffentlichungstag der Anmeldung: 12.10.2016
(73) Patentinhaber: Rieter Ingolstadt GmbH, 85055 Ingolstadt (DE)
(72) Erfinder: Gruber, Thomas, 85049 Ingolstadt (DE); Maleck, Mario, 85137 Walting (DE); Zipperer, Martin, 92339 Beilngries (DE); Hüttinger, Franz, 85290 Geisenfeld (DE)
(74) Vertreter: Baudler, Ron

(56) Entgegenhaltungen:
- EP-A1- 2 573 635
- WO-A1-2016/016739
- DE-A1- 10 340 234
- DE-A1-102005 002 472

## Beschreibung

Die vorliegende Erfindung betrifft ein Verfahren zur Freigabe von Maschinenfunktionen an einer, mehrere Komponenten umfassenden, Spinnereimaschine. Dabei werden maschinenspezifische Daten an eine örtlich von der Spinnereimaschine entfernte Freigabeeinrichtung übertragen. Durch die Freigabeeinrichtung werden die maschinenspezifischen Daten ausgewertet. Die Freigabeeinrichtung wählt in Abhängigkeit der maschinenspezifischen Daten Freigabedaten aus. Die Freigabedaten werden an die Spinnereimaschine übertragen und Maschinenfunktionen werden in Abhängigkeit der Freigabedaten freigegeben.

In der DE 10 2005 002 472 A1 wird eine Textilmaschine und eine Softwareschutzvorrichtung mit einer programmierbaren Steuerung, einem Datenspeicher zur Aufnahme von Softwarefreigabedaten und einer Datenschnittstelle, welche zur Datenübertragung zwischen dem Datenspeicher und der Steuerung der Textilmaschine an die Steuerung der Textilmaschine anbindbar ist, vorgeschlagen. Nachteilig an einer derartigen Softwareschutzvorrichtung ist, dass Lizenzen nicht von einer übergeordneten Instanz bereitgestellt und/oder kontrolliert werden. Eine derartige Textilmaschine ist leicht manipulierbar.

In der WO 2016/016739 A1 ist ein Überwachungssystem für eine Spinnanlage offenbart. Das Überwachungssystem umfasst Erkennungseinheiten, die Textilmaschinen zugeordnet sind, und Hauptspeichermittel, die in einem von der Spinnanlage entfernten Kontrollraum angeordnet sind. Des Weiteren umfasst das Überwachungssystem entfernte Verarbeitungsmittel, die mit den Hauptspeichermittel verbunden sind, um eine große Menge an Daten zu verarbeiten und eine prognostizierte Wartung durchzuführen.

In der EP 2 573 635 A1 ist als zentrale Vorrichtung ein Servercomputer offenbart, der von einem Clientcomputer Anlagenidentifikationsinformationen und eine Vielzahl an Betriebsinformationen von Textilmaschinen und Einheiten erhält. Der Servercomputer speichert die entsprechenden Daten in einem Speicherabschnitt und erkennt Fehlfunktionen der einzelnen Textilmaschinen.

Aufgabe der vorliegenden Erfindung ist es somit, ein möglichst sicheres und dennoch einfaches Verfahren zur Freigabe von Maschinenfunktionen einer Spinnereimaschine zu schaffen.

Die Aufgabe wird gelöst durch ein Verfahren zur Freigabe von Maschinenfunktionen mit den Merkmalen des unabhängigen Patentanspruchs 1.

Vorgeschlagen wird ein Verfahren zur Freigabe von Maschinenfunktionen an einer, mehrere Komponenten umfassenden, Spinnereimaschine. Zunächst werden maschinenspezifische Daten an eine örtlich von der Spinnereimaschine entfernte Freigabeeinrichtung übertragen. Die maschinenspezifischen Daten sind alle Daten, die eine Spinnereimaschine charakterisieren. Dies sind zum Beispiel die Art der Spinnereimaschine (Rotorspinnmaschine, Strecke, etc.), deren Bezeichnung und/oder Seriennummer, eine bisherige Betriebszeit, die Größe der Spinnereimaschine (z B. Anzahl der Spinnstellen einer als Spinnmaschine ausgebildeten Spinnereimaschine), der Standort und/oder Angaben über die bisherige Lizenz des Betreibers der Spinnereimaschine. Mit der Lizenz werden Maschinenfunktionen freigeschalten, so dass die Spinnereimaschine in Abhängigkeit der durch den Betreiber erworbenen Lizenz betrieben werden kann. Wird die Spinnereimaschine ohne Lizenz betrieben, ist die Funktionalität eingeschränkt oder die Spinnereimaschine kann gar nicht betrieben werden.

Bei der Freigabeeinrichtung handelt es sich zum Beispiel um ein Computersystem des Herstellers der Spinnereimaschine oder einer zum Vergeben von Lizenzen berechtigten Institution, das ausgebildet ist, die empfangenen maschinenspezifischen Daten auf Basis von entsprechenden Algorithmen und/oder unter Berücksichtigung vorhandener Datenbanken auszuwerten.

Die Freigabeeinrichtung und die Spinnereimaschine können in verschiedenen Ländern angesiedelt sein. Die Übertragung der maschinenspezifischen Daten kann über elektronischem Weg, wie zum Beispiel über das Internet und/oder mittels E-Mail, stattfinden. Wenn die Spinnereimaschine und die Freigabeeinrichtung in einem Gebäude oder auf einem Gelände angesiedelt sind, kann die Übertragung der maschinenspezifischen Daten auch über lokale Netzwerke, wie W-LAN oder ein Intranet, ausgeführt werden.

Nach dem Übertragen der maschinenspezifischen Daten werden diese durch die Freigabeeinrichtung ausgewertet. Die Freigabeeinrichtung kontrolliert dabei zum Beispiel die Größe der Spinnereimaschine und die aktuell benutzte Lizenz und prüft, ob diese Daten denen bei der Auslieferung der Spinnereimaschine entsprechen. Bereits hierbei kann eine Manipulation der Spinnereimaschine entdeckt werden. Eine unerlaubte Erweiterung der Spinnereimaschine wird durch einen Vergleich der aktuellen maschinenspezifischen Daten mit denen, die bei der Auslieferung abgespeichert wurden, erkennbar.

Danach erfolgt eine Auswahl von Freigabedaten durch die Freigabeeinrichtung in Abhängigkeit der maschinenspezifischen Daten. Die Freigabedaten enthalten Informationen über die Maschinenfunktionen der Spinnereimaschine. Mittels der Freigabedaten können so zum Beispiel vom Hersteller der Spinnereimaschine neue Maschinenfunktionen freigeschalten oder alte Maschinenfunktionen blockiert werden. Die Freigabedaten können darüber hinaus auch einen Zeitraum beinhalten, wie lange die Spinnereimaschine auf welche Weise betrieben werden kann. Die Auswahl der Freigabedaten hängt dabei zum Beispiel von einer Zahlung des Betreibers der Spinnereimaschine an den Betreiber der Freigabeeinrichtung ab. Mittels von zum Beispiel Lizenzzahlungen kann der Betrieb der Spinnereimaschine verlängert werden. Die Freigabedaten können ein Ablaufdatum enthalten. Nach einem Ablauf der Freigabedaten auf einer Spinnereimaschine kann diese nicht oder nur mit Grundfunktionen betrieben werden. Dies erhöht die wirtschaftliche Sicherheit des Betreibers der Freigabeeinrichtung, insbesondere des Herstellers der Spinnereimaschine.

Anschließend werden die Freigabedaten an die Spinnereimaschine zurück übertragen. Dies kann mit den gleichen Mittel durchgeführt werden, wie das Übertragen der maschinenspezifischen Daten an die Freigabeeinrichtung.

Darauf folgend werden spezifische Maschinenfunktionen in Abhängigkeit der Freigabedaten freigegeben. Bei den spezifischen Maschinenfunktionen kann es sich um die Produktionsgeschwindigkeit der Spinnereimaschine handeln. Ebenso können mittels der Freigabedaten einzelne Maschinensektionen freigeschalten werden, so dass nach der Freischaltung an einer größeren Anzahl von Sektionen produziert werden kann. Natürlich können mit besonderen Freigabedaten auch Maschinenfunktionen eingeschränkt werden. Dies kann dann nützlich sein, wenn der Betreiber einer Spinnereimaschinen nach Ablauf einer Lizenz weniger Lizenzzahlungen an den Hersteller der Maschine leistet. Nach Ablauf einer Lizenz ist schließlich die Funktionalität der Spinnereimaschine eingeschränkt oder sie kann gar nicht mehr betrieben werden. Ein Betreiber der Spinnereimaschine wird so gezwungen, Zahlungen an den Hersteller zu leisten. Der Hersteller hat dadurch eine wirtschaftliche Sicherheit.

Die Sicherheit gegen eine Manipulation der Spinnereimaschine kann dadurch erhöht werden, dass zuerst die Freigabeeinrichtung kontaktiert werden muss um die Spinnereimaschine in Betrieb nehmen oder um zumindest die wichtigsten Maschinenfunktionen aktivieren zu können. Dazu muss der Bertreiber der Spinnereimaschine einen Status, nämlich die maschinenspezifischen Daten, an die Freigabeeinrichtung schicken. Die Freigabeeinrichtung kann somit verhindern, dass die Spinnereimaschine mittels unerlaubter und/oder nicht zertifizierter Komponenten betrieben wird. Außerdem kann der Hersteller verhindern, dass ein Betreiber der Spinnereimaschine diese über einen erlaubten Zeitraum hinweg benutzt. Der Betreiber der Spinnereimaschine muss nämlich nach Ablauf einer Lizenz erneut die maschinenspezifischen Daten an die Freigabeeinrichtung schicken, um wieder neue Freigabedaten, insbesondere eine Lizenz, zu erhalten. Erst mit neuen Freigabedaten kann die Spinnereimaschine weiter betrieben werden. Die Freigabedaten enthalten somit eine Erlaubnis darüber, wie lange und in welchem Umfang die Spinnereimaschine vom Betreiber benutzt werden kann/darf.

Eine vorteilhafte Weiterbildung der Erfindung ist dadurch gekennzeichnet, dass die maschinenspezifischen Daten vorder Übertragung an die Freigabeeinrichtung verschlüsselt und nach der Übertragung, vorzugsweise durch die Freigabeeinrichtung, wieder entschlüsselt werden. Damit kann verhindert werden, dass die maschinenspezifischen Daten während der Übertragung abgefangen werden oder derart verändert werden, dass daraus ein Vorteil für den Betreiber der Spinnereimaschine entsteht. Ein Betreiber könnte zum Beispiel die Daten derart fälschen, dass darin weniger Komponenten der Spinnereimaschine angezeigt werden als tatsächlich vorhanden sind, mit der Absicht, eine geringere Lizenz zu zahlen. Mit der genannten Verschlüsselung wird die Spinnereimaschine gegen eine Manipulation sicherer. Als Verschlüsselung kann dabei zum Beispiel ein Advanced Encryption Standard (AES) mit einer Schlüssellänge von 128 Bit, 192 Bit oder 256 Bit angewendet werden. Eine derartige Verschlüsselung weist eine hohe Sicherheit auf.

Ebenfalls ist es von Vorteil, wenn die Freigabedaten vor der Übertragung an die Spinnereimaschine verschlüsselt und nach der Übertragung, vorzugsweise durch die Spinnereimaschine, wieder entschlüsselt werden. Dadurch wird eine Manipulation der Freigabedaten verhindert. Die Freigabedaten enthalten wichtige Informationen zum Betrieb der Spinnereimaschine. So kann darin zum Beispiel eine Erlaubnis zum Betrieb der Maschine bis zu einem bestimmten Zeitpunkt enthalten sein. Eine Manipulation, insbesondere eine Verlängerung der Betriebserlaubnis, ist für den Hersteller ein Gewinnverlust. Als Verschlüsselung kann dabei ein Advanced Encryption Standard (AES) mit einer Schlüssellänge von 128 Bit, 192 Bit oder 256 Bit angewendet werden.

Da die maschinenspezifischen Daten eine die Spinnereimaschine charakterisierende Maschinen-ID umfassen, bringt dies weitere Vorteile mit sich. Unter der Maschinen-ID versteht man einen eindeutigen Code, insbesondere einen Zahlenwert oder eine Zeichenfolge, mittels dem die Spinnereimaschine identifizierbar ist. Die Maschinen-ID kann im einfachsten Fall die Seriennummer der Spinnereimaschine sein. Jedoch kann die Maschinen-ID auch den Standort der Spinnereimaschine und/oder das Auslieferungsdatum umfassen. All diese Daten können verkürzt werden, in dem von den zur Verfügung stehenden Daten ein Hashwert gebildet wird. Eine einen Hashwert bildende Hashfunktion verkürzt die Daten über Standort, Auslieferungsdatum und/oder Seriennummer oder sonstiger Daten auf einen vorgegebenen Zahlenbereich. Eine derartige Maschinen-ID vereinfacht dabei die Identifizierung der Spinnereimaschine.

Ferner ist vorgesehen, dass die Maschinen-ID durch Abrufen und Zusammenfassen von einzelnen, die jeweiligen Komponenten der Spinnereimaschine charakterisierende, Komponenten-IDs erstellt wird. Somit ist in der Maschinen-ID die Information über den Aufbau der Spinnereimaschine enthalten. Es kann mit der Maschine-ID eine Aussage darüber getroffen werden, wie viele Sektionen und/oder Roboter die Spinnereimaschine umfasst. Die Komponenten-ID kann die Seriennummer, Versionsnummer und/oder das Herstellungsdatum der Komponente enthalten. Damit wird die Spinnereimaschine genauer identifizierbar. Außerdem kann die Freigabeeinrichtung die maschinenspezifischen Daten besser auswerten. Die darin enthalten Komponenten-IDs werden dabei ebenfalls ausgewertet. Damit kann die Freigabeeinrichtung bei Erhalt der maschinenspezifischen Daten erkennen, ob und welche Komponente(n) unerlaubt ausgetauscht und/oder manipuliert wurde(n).

Ebenso ist es von Vorteil, wenn die Maschinen-ID vor dem regulären Betrieb der Spinnereimaschine erstellt und an eine Speichereinheit der Spinnereimaschine übertragen wird. Dabei bleibt die Maschinen-ID nach der Übertragung solange an die Speichereinheit gekoppelt, bis einzelne Komponenten der Spinnereimaschine in einem vorgegebenen Maß entfernt, ergänzt und/oder verändert werden.

Dadurch kann auch eine Speichereinheit nicht unerlaubt ausgetauscht werden. Es wird verhindert, dass eine Speichereinheit einer Spinnereimaschine, für die weniger Lizenzzahlungen geleistet werden, an einer anderen Spinnereimaschine benutzt wird, für die normalerweise höhere Lizenzzahlungen geleistet werden müssten. Damit kann eine entsprechende Manipulation verhindert werden. Jedoch kann es dem Betreiber erlaubt werden, zum Beispiel vom Hersteller zertifizierte Ersatzteile selbstständig auszutauschen, ohne dass die Spinnereimaschine in ihrer Funktionalität eingeschränkt wird. Dies vereinfacht den Betrieb der Spinnereimaschine für den Betreiber, der nicht bei jeder Veränderung die Freigabeeinrichtung kontaktiert werden muss.

Die Speichereinheit kann dabei zum Beispiel ein Dongle oder ein Modul sein, das mit der Spinnereimaschine über ein Netzwerkkabel, W-LAN oder einen CAN-Bus verbunden ist. Die Speichereinheit weist dazu eine geeignete Schnittstelle auf.

Darüber hinaus ist es von Vorteil, wenn die Maschinen-ID vor der erstmaligen Übertragung an die Speichereinheit an eine örtlich von der Spinnereimaschine entfernten Verifizierungseinheit übermittelt, dort überprüft und erst bei erfolgreicher Verifizierung an die Speichereinheit übertragen wird. Bei der Verifizierungseinheit handelt es sich vorzugsweise um ein Computersystem des Herstellers oder eines entsprechend Berechtigten. Durch das Übertragen der Maschinen-ID wird der Verifizierungseinheit der Aufbau der Spinnereimaschine, insbesondere die verbauten Komponenten mit deren Daten, wie zum Beispiel Herstellungsdatum und/oder Seriennummer, mitgeteilt. Die Verifizierungseinheit kann daraufhin überprüfen, ob die Maschinen-ID der erwarteten Maschinen-ID entspricht. Die erwartete Maschinen-ID ist der Verifizierungseinheit bekannt, da diese den Aufbau kennt. Wenn ein Betreiber unerlaubt weitere Komponenten zur Spinnereimaschine hinzufügt oder diese anderweitig manipuliert, stimmt die übertragene Maschinen-ID nicht mit der zu erwartenden Maschinen-ID überein. Eine erfolgreiche Verifizierung bleibt in diesem Fall aus und die Maschinen-ID wird nicht an die Spinnereimaschine zurück übertragen. Die Spinnereimaschine ist in diesem Fall nicht oder zumindest nur eingeschränkt betriebsfähig. Damit wird eine Manipulation der Spinnereimaschine verhindert.

Eine vorteilhafte Weiterbildung der Erfindung ist es, wenn bei einem Neustart der Spinnereimaschine zunächst die aktuelle Maschinen-ID ermittelt wird. Anschließend wird die aktuelle Maschinen-ID mit der in der Speichereinheit hinterlegten Maschinen-ID verglichen und spezifische Maschinenfunktionen werden nur dann freigegeben, wenn die beim Neustart der Spinnereimaschine erstellte Maschinen-ID mit der in der Speichereinheit hinterlegten Maschinen-ID übereinstimmt oder lediglich in einem zuvor definiertem Maße von dieser abweicht. Bei jedem Neustart wird so überprüft, ob an die Spinnereimaschine unerlaubt zusätzlich Komponenten hinzugefügt und/oder entfernt wurden. Es ist dabei möglich, dass die Speichereinheit zum Beispiel toleranter auf ein Entfernen von Komponenten reagiert, d.h. die Speichereinheit trotz des Entfernens alle Maschinenfunktionen freischaltet. Dagegen kann bei einer Erweiterung der Spinnereimaschine die Funktionalität eingeschränkt werden. Dies verhindert Manipulationen an dem Aufbau, insbesondere den Komponenten, der Spinnereimaschine.

Außerdem ist es von Vorteil, wenn die Maschinen-ID von einer Steuerung der Spinnereimaschine ermittelt, vor dem Übertragen zur Speichereinheit verschlüsselt und durch die Speichereinheit wieder entschlüsselt wird, um eine sichere Übertragung der Maschinen-ID zwischen der Steuerung und der Speichereinheit zu gewährleisten. Als Verschlüsselung kann dabei ein Advanced Encryption Standard (AES) mit einer Schlüssellänge von 128 Bit, 192 Bit oder 256 Bit angewendet werden. Dadurch wird die Übertragung sicherer, insbesondere gegen eine Manipulation der Maschinen-ID während der Übertragung. Ein Manipulator ist dabei daran interessiert, zum Beispiel die manipulierten Komponenten einer Spinnereimaschine als von der Freigabeeinrichtung und/oder der Verifizierungseinheit verifizierte Komponenten erscheinen zu lassen.

Die Steuerung der Spinnereimaschine ist zum Beispiel ein Computer, der die zum Betrieb der Spinnereimaschine erforderlichen Programme ausführt. Die Speichereinheit kann mit dem Computer mittels USB-Port, eines Netzwerkkabels oder über W-LAN verbunden sein. Außerdem kann die Speichereinheit auch in dem Gehäuse des Computers angeordnet sein, wodurch eine Manipulation der Speichereinheit erschwert wird.

Ferner ist es vorteilhaft, wenn sich die Steuerung und die Speichereinheit vor einer zwischen der Steuerung und der Speichereinheit stattfindenden Datenübertragung gegenseitig authentifizieren. Somit können sich die beiden Teilnehmer, in diesem Fall die Steuerung und die Speichereinheit, sicher sein, dass der jeweilige Gegenüber ein Berechtigter ist. Damit wird eine unerlaubte Manipulation der Steuerung und der Speichereinheit erschwert. Insbesondere ist es nicht möglich, die Steuerung und/oder die Speichereinheit durch ein Plagiat auszutauschen, um dadurch die Spinnereimaschine mit einer gefälschten Lizenz zu betreiben.

Wenn die Authentifizierung mit Hilfe eines Challenge-Response-Verfahrens erfolgt, ist dies zusätzlich von Vorteil. Mittels dieses Verfahrens wird die Authentifizierung noch sicherer. Eine Manipulation der Spinnereimaschine wird somit erschwert.

Vorteilhaft ist es, wenn nach erfolgreicher gegenseitiger Authentifizierung eine Verbindungs-ID erstellt wird, mit deren Hilfe nachfolgende Datenübertragungen zwischen der Steuerung und der Speichereinheit verifiziert werden. Dies erhöht weiter die Sicherheit. Damit kann verhindert werden, dass während der Verbindung zwischen Steuerung und Speichereinheit die übertragenen Daten verändert, insbesondere gefälscht, werden.

Von Vorteil ist es, wenn die Verbindungs-ID nicht geändert wird, solange eine Verbindung zwischen der Speichereinheit und der Steuerung besteht, und dass eine neue Verbindungs-ID erst dann erstellt wird, wenn die genannte Verbindung unterbrochen wurde und neu aufgebaut werden soll. Somit wird eine Manipulation der Datenübertragung zwischen Steuerung und Speichereinheit erschwert. Wenn zum Beispiel eine Vorrichtung zwischen Steuerung und Speichereinheit zur Fälschung der zu übertragenden Daten zwischengeschaltet wird, muss die Verbindung zumindest kurzzeitig unterbrochen werden. Diese Unterbrechung erfordert jedoch wieder eine Authentifizierung. Diese schlägt dann allerdings, wegen der zusätzlichen Vorrichtung, fehl.

Eine zusätzliche vorteilhafte Weiterbildung der Erfindung ist es, wenn bei der Übertragung von Daten, insbesondere der maschinenspezifischen Daten, der Maschinen-ID und/oder der Komponenten-IDs, ein Hashwert der besagten Daten mitübertragen wird. Der Hashwert kann auch mit den besagten Daten zusammengefügt werden, zu einem so genannten Fingerprint. Einer derartiger Fingerprint kann verschlüsselt werden, so dass es weiter erschwert wird, den Fingerprint und somit die besagten Daten zu fälschen.

Mittels eines Hashwertes werden die besagten Daten gegen Fälschung gesichert. Der Hashwert ist darüber hinaus einfach zu berechnen. Ein Merkmal des Hashwertes ist, dass eine Veränderung der besagten Daten zu einem völlig verschiedenen Hashwert führt. Eine besonders einfache Manipulation der besagten Daten wäre zum Beispiel, dass ein Manipulator lediglich die Jahreszahl, wann die Lizenz abläuft, um ein Jahr erhöht. Damit müsste der Manipulator nur eine Ziffer ändern, um sich Lizenzzahlungen für ein Jahr zu sparen. Eine derartige Veränderung der besagten Daten führt jedoch zu einem vollkommen anderen Hashwert, womit die Freigabeeinrichtung sofort erkennt, dass eine Veränderung vorliegt. Die Freigabeeinrichtung besitzt dazu zum Vergleich den Hashwert der unveränderten Daten. Zum Beispiel wurde dieser Hashwert beim letzten Erhalt der maschinenspezifischen Daten erzeugt und abgespeichert. Ein Verfahren, um den Hashwert zu erzeugen, ist zum Beispiel ein Secure Hash Algorithm, insbesondere der SHA-3.

Ebenso ist es von Vorteil, wenn die maschinenspezifischen Daten, die Maschinen-ID, die Komponenten-IDs und/oder die Freigabedaten in der Speichereinheit verschlüsselt abgespeichert. Dies erhöht die Sicherheit, da die in der Speichereinheit abgespeicherten Daten nicht manipuliert werden können. Zusätzlich oder alternativ wird die Sicherheit erhöht, wenn die genannten Daten nur von autorisierten Einheiten ausgelesen werden können. Derartige Einheiten können die Steuerung, die Freigabeeinrichtung, die Verifizierungseinheit und/oder eine andere Vorrichtung sein. Derartige Vorrichtungen können zum Beispiel mobile Diagnosegeräte und/oder Rechnereinheiten sein, mittels der eine Serviceperson die in der Speichereinheit gespeicherten Daten kontrollieren und/oder verändern kann.

Weitere Vorteile der Erfindung sind in dem nachfolgenden Ausführungsbeispiel beschrieben. Es zeigt:

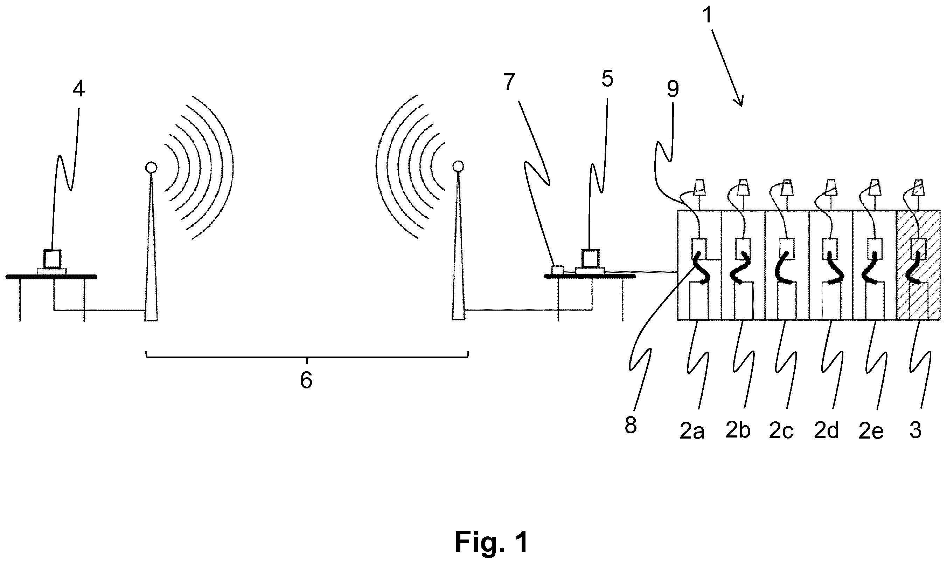

- **Figur 1**: eine schematische Darstellung einer Spinnereimaschine mit einer Datenübertragung an eine Freigabeeinrichtung.

Figur 1 zeigt eine schematische Darstellung einer Spinnereimaschine 1 sowie eine räumlich von der Spinnereimaschine 1 entfernt Freigabeeinrichtung 4. Die Spinnereimaschine in diesem Ausführungsbeispiel als Spinnereimaschine mit mehreren Sektionen 2a-2e, 3 ausgebildet, an denen aus einem Faserband 8 ein Garn 9 (der Einfachheit halber ist nur bei einer Sektion das Faserband und das Garn mit einem Bezugszeichen versehen) hergestellt wird. Die Spinnereimaschine 1 wird von einer Steuerung 5 betrieben. Die Steuerung 5 kann ein Computer sein, der die für den Betrieb benötigte Software beinhaltet. Mit der Steuerung 5 ist eine Speichereinheit 7 verbunden. Diese kann mittels eines Datenkabels, insbesondere eines Netzwerkkabels oder ähnlichem, mit der Steuerung 5 verbunden sein. Die Speichereinheit 7 kann jedoch auch in dem Gehäuse der Steuerung 5 angeordnet sein. Ebenfalls könnte die Speichereinheit 7 zum Beispiel als Dongle ausgeführt sein und direkt an zum Beispiel einem USB-Port der Steuerung 5 eingesteckt sein.

Bei jedem Neustart der Spinnereimaschine 1 werden maschinenspezifische Daten, insbesondere die Maschinen-ID und/oder die Komponenten-IDs, der Sektionen 2a-2e, 3 abgefragt. In diesem Ausführungsbeispiel sind die Sektionen 2a-2e von dem Hersteller erlaubte Komponenten. Die Sektion 3 dagegen ist als Beispiel einer unerlaubt hinzugefügten Sektion dargestellt. Die Steuerung 5 erhält, zum Beispiel über eine CAN-Verbindung, die Komponenten-IDs aller Sektionen 2a-2e, 3 und fügt diese mit anderen Daten, wie zum Beispiel der Betriebsdauer, der Seriennummer und/oder der derzeit benutzten Lizenz zu den maschinenspezifischen Daten zusammen. Zusätzlich oder alternativ kann von diesen maschinenspezifischen Daten ein Hashwert hinzugefügt werden, um die Daten vor Manipulationen zu schützen.

Die gesammelten maschinenspezifischen Daten, die Maschinen-ID und/oder die Komponenten-IDs werden mit bereits vorhandenen Freigabedaten, die in der Speichereinheit 7 abgespeichert sein können, verglichen. Diese Freigabedaten enthalten zum Beispiel einen Zeitraum, wie lange die Spinnereimaschine 1 betrieben werden kann. Vorteilhafterweise enthalten die Freigabedaten auch eine Liste der von der Freigabeeinrichtung 4, insbesondere des Herstellers, freigegebenen Komponenten-IDs. In dem gezeigten Ausführungsbeispiel enthalten die Freigabedaten die Komponenten-IDs der Sektionen 2a-2e, da diese beim Aufbau der Spinnereimaschine 1 bereitgestellt wurden, oder da nur für die fünf Sektionen 2a-2e Lizenzgebühren bezahlt werden. Es fällt der Steuerung 5 auf, dass die Sektion 3 nicht als Komponenten-ID in den Freigabedaten enthalten ist. Die Steuerung 5 kann daraufhin die Funktionalität der Spinnereimaschine 1 einschränken oder den gesamten Betrieb der Spinnereimaschine 1 unterbinden.

Die maschinenspezifischen Daten können auch mittels einer Datenübertragung 6 zu der Freigabeeinrichtung 4 übertragen werden. Die hier schematisch dargestellte Datenübertragung 6 kann zum Beispiel als W-LAN ausgeführt sein, wenn die Freigabeeinrichtung 4 und der Steuerung 5 auf einem Firmengelände oder in einem Gebäude angeordnet sind. Die Datenübertragung 6 kann jedoch auch als Netzwerkkabel ausgebildet sein. Wenn dagegen die Freigabeeinrichtung 4 und die Steuerung 5 in unterschiedlichen Ländern angeordnet sind, kann die Datenübertragung 6 auch über das Internet und/oder per E-Mail erfolgen.

Die Freigabeeinrichtung 4 wertet die empfangenen maschinenspezifischen Daten aus und erkennt bei der Auswertung der maschinenspezifischen Daten, dass die unerlaubte Sektion 3 mitbetrieben wird.

Die Freigabeeinrichtung 4 wählt daraufhin Freigabedaten aufgrund der maschinenspezifischen Daten aus. Die Freigabedaten werden anschließend mittels der Datenübertragung 6, insbesondere über W-LAN, Internet und/oder ein sonstiges Netzwerk, an die Steuerung 5 zurück übertragen und in der Speichereinheit 7 gespeichert. Jede Datenübertragung 6 wird dabei vorteilhafterweise verschlüsselt ausgeführt, so dass die maschinenspezifischen Daten und/oder die Freigabedaten vor Manipulation sicher sind.

Sind die Freigabedaten an der Spinnereimaschine 1 angelangt, werden sie in der Speichereinheit 7 abgespeichert. Zwischen der Steuerung 5 und der Speichereinheit 7 wird eine sichere Verbindung aufgebaut, insbesondere erfolgt eine Authentifizierung zwischen diesen beiden Teilnehmern. Des Weiteren ist die Verbindung zwischen der Speichereinheit 7 und der Steuerung 5 verschlüsselt, um die Freigabedaten vor Manipulation zu schützen.

Die Steuerung 5 schaltet dann in Abhängigkeit der Freigabedaten spezifische Maschinenfunktionen frei. Dabei kann es sich um den Betrieb alle sechs Sektionen 2a-2e, 3 handeln, wenn zum Beispiel der Betreiber seine Lizenzzahlungen im Vergleich zu vorher erhöht hat.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Spinnereimaschine
- 2: Zertifizierte Sektionen
- 3: Unerlaubte Sektion
- 4: Freigabeeinrichtung
- 5: Steuerung der Spinnereimaschine
- 6: Datenübertragung
- 7: Speichereinheit
- 8: Faserband
- 9: Garn

## Patentansprüche

1. Verfahren zur Freigabe von Maschinenfunktionen an einer, mehrere Komponenten (2a-2e, 3) umfassenden, Spinnereimaschine (1), aufweisend die folgenden, zeitlich nacheinander ablaufenden, Schritte:
- Übertragen von maschinenspezifischen Daten an eine örtlich von der Spinnereimaschine (1) entfernte Freigabeeinrichtung (4), wobei die maschinenspezifischen Daten eine die Spinnereimaschine (1) charakterisierende Maschinen-ID umfassen, die durch Abrufen und Zusammenfassen von einzelnen, die jeweiligen Komponenten (2a-2e, 3) der Spinnereimaschine (1) charakterisierenden, Komponenten-IDs erstellt wird,
- Auswertung der maschinenspezifischen Daten durch die Freigabeeinrichtung (4),
- Auswahl von Freigabedaten durch die Freigabeeinrichtung (4) in Abhängigkeit der maschinenspezifischen Daten,
- Übertragung der Freigabedaten an die Spinnereimaschine (1),
- Freigabe spezifischer Maschinenfunktionen in Abhängigkeit der Freigabedaten.

2. Verfahren gemäß dem vorangegangenen Anspruch, **dadurch gekennzeichnet, dass** die maschinenspezifischen Daten vor der Übertragung an die Freigabeeinrichtung (4) verschlüsselt und nach der Übertragung, vorzugsweise durch die Freigabeeinrichtung (4), wieder entschlüsselt werden.

3. Verfahren gemäß einem der vorangegangenen Ansprüche, **dadurch gekennzeichnet, dass** die Freigabedaten vorder Übertragung an die Spinnereimaschine (1) verschlüsselt und nach der Übertragung, vorzugsweise durch die Spinnereimaschine (1), wieder entschlüsselt werden.

4. Verfahren gemäß Anspruch 1, **dadurch gekennzeichnet, dass** die Maschinen-ID vor dem regulären Betrieb der Spinnereimaschine (1) erstellt und an eine Speichereinheit (7) der Spinnereimaschine (1) übertragen wird, wobei die Maschinen-ID nach der Übertragung solange an die Speichereinheit (7) gekoppelt bleibt, bis einzelne Komponenten (2a-2e, 3) der Spinnereimaschine (1) in einem vorgegeben Maß entfernt, ergänzt oder verändert werden.

5. Verfahren gemäß einem der Ansprüche 1 bis 4, **dadurch gekennzeichnet, dass** die Maschinen-ID vor der erstmaligen Übertragung an die Speichereinheit (7) an eine örtlich von der Spinnereimaschine (1) entfernte Verifizierungseinheit übermittelt, dort überprüft und erst bei erfolgreicher Verifizierung an die Speichereinheit (7) übertragen wird.

6. Verfahren gemäß einem der Ansprüche 1 bis 5, **dadurch gekennzeichnet, dass** bei einem Neustart der Spinnereimaschine (1) zunächst die aktuelle Maschinen-ID ermittelt wird, dass die aktuelle Maschinen-ID mit der in der Speichereinheit (7) hinterlegten Maschinen-ID verglichen wird, und dass spezifische Maschinenfunktionen nur dann freigegeben werden, wenn die beim Neustart der Spinnereimaschine (1) erstellte Maschinen-ID mit der in der Speichereinheit (7) hinterlegten Maschinen-ID übereinstimmt oder lediglich in einem zuvor definierten Maße von dieser abweicht.

7. Verfahren gemäß einem der Ansprüche 4 bis 6, **dadurch gekennzeichnet, dass** die Maschinen-ID von einer Steuerung (5) der Spinnereimaschine (1) ermittelt, vor dem Übertragen zur Speichereinheit (7) verschlüsselt und durch die Speichereinheit (7) wieder entschlüsselt wird, um eine sichere Übertragung der Maschinen-ID zwischen der Steuerung (5) und der Speichereinheit (7) zu gewährleisten.

8. Verfahren gemäß einem der Ansprüche 4 bis 7, **dadurch gekennzeichnet, dass** sich die Steuerung (5) und die Speichereinheit (7) vor einer zwischen der Steuerung (5) und der Speichereinheit (7) stattfindenden Datenübertragung gegenseitig authentifizieren.

9. Verfahren gemäß dem vorangegangenen Anspruch, **dadurch gekennzeichnet, dass** die Authentifizierung mit Hilfe eines Challenge-Response-Verfahrens erfolgt.

10. Verfahren gemäß Anspruch 8 oder 9, **dadurch gekennzeichnet, dass** nach erfolgreicher gegenseitiger Authentifizierung eine Verbindungs-ID erstellt wird, mit deren Hilfe nachfolgende Datenübertragungen zwischen der Steuerung (5) und der Speichereinheit (7) verifiziert werden.

11. Verfahren gemäß dem vorangegangenen Anspruch, **dadurch gekennzeichnet, dass** die Verbindungs-ID nicht geändert wird, solange eine Verbindung zwischen der Speichereinheit (7) und der Steuerung (5) besteht, und dass eine neue Verbindungs-ID gemäß vorangegangenem Anspruch erstellt wird, wenn die genannte Verbindung unterbrochen wurde und neu aufgebaut werden soll.

12. Verfahren gemäß einem der vorangegangenen Ansprüche, **dadurch gekennzeichnet, dass** die maschinenspezifischen Daten, die Maschinen-ID, die Komponenten-IDs und/oder die Freigabedaten in der Speichereinheit verschlüsselt abgespeichert werden und/oder die genannten Daten nur von autorisierten Einheiten ausgelesen werden können.

## Claims

1. Method for the enabling of machine functions on a spinning-mill machine (1) comprising multiple components (2a-2e, 3), featuring the following steps which are proceeding one after the other:
- Transfer of machine-specific data to an enabling device (4) physically remote from the spinning-mill machine (1), whereas the machine-specific data comprise a machine ID characterizing the spinning-mill machine (1) which machine ID is created by retrieving and aggregating individual component IDs characterizing the respective components (2a-2e, 3) of the spinning-mill machine (1),
- Evaluation of the machine-specific data through the enabling device (4),
- Selection of enabling data through the enabling device (4) depending on the machine-specific data,
- Transfer of the enabling data to the spinning-mill machine (1),
- Enabling of specific machine functions depending on the enabling data.

2. Method according to the preceding claim, **characterized in that** the machine-specific data is encrypted prior to the transfer to the enabling device (4), and is once again decrypted after the transfer, preferably by the enabling device (4).

3. Method according to one of the preceding claims, **characterized in that** the enabling data is encrypted prior to the transfer to the spinning-mill machine (1), and is once again decrypted after the transfer, preferably by the spinning-mill machine (1).

4. Method according to claim 1, **characterized in that** the machine ID is created prior to the normal operation of the spinning-mill machine (1), and is transferred to a memory unit (7) of the spinning-mill machine (1), whereas, after the transfer, the machine ID remains coupled to the memory unit (7) until individual components (2a-2e, 3) of the spinning-mill machine (1) are removed, supplemented and/or modified to a predetermined extent.

5. Method according to one of claims 1 to 4, **characterized in that**, prior to the first transfer to the memory unit (7), the machine ID is transmitted to a verification unit remote from the spinning-mill machine (1), is examined there and, only upon a successful verification, is transferred to the memory unit (7).

6. Method according to one of claims 1 to 5, **characterized in that**, upon a restart of the spinning-mill machine (1), the current machine ID is initially determined, that the current machine ID is compared with the machine ID stored in the memory unit (7), and that specific machine functions are only enabled if the machine ID created upon the restart of the spinning-mill machine (1) matches the machine ID stored in the memory unit (7), or deviates from it only to a previously defined extent.

7. Method according to one of claims 4 to 6, **characterized in that** the machine ID is determined by a controller (5) of the spinning-mill machine (1), is encrypted prior to transfer to the memory unit (7) and is once again decrypted by the memory unit (7), in order to ensure a secure transfer of the machine ID between the controller (5) and the memory unit (7).

8. Method according to one of claims 4 to 7, **characterized in that** the controller (5) and the memory unit (7) are mutually authenticated prior to a data transfer taking place between the controller (5) and the memory unit (7).

9. Method according to the preceding claim, **characterized in that** the authentication is performed using a challenge-response process.

10. Method according to claim 8 or 9, **characterized in that**, after a successful mutual authentication, a connection ID is created, with the help of which subsequent data transfers between the controller (5) and the memory unit (7) are verified.

11. Method according to the preceding claim, **characterized in that** the connection ID is not modified as long as there is a connection between the memory unit (7) and the controller (5), and that a new connection ID in accordance with the preceding claim is created if the specified connection was interrupted and is to be re-established.

12. Method according to one of the preceding claims, **characterized in that** the machine-specific data, the machine ID, the component IDs and/or the enabling data are stored in the memory unit in encrypted form, and/or the specified data can be read only by authorized units.

## Revendications

1. Procédé pour libérer des fonctions de machine sur une machine de filature (1) comportant plusieurs composants (2a-2e, 3), comprenant les étapes suivantes s'exécutant successivement :
- transmission de données spécifiques à la machine à un dispositif de libération (4) distant de la machine de filature (1), dans lequel les données spécifiques à la machine contiennent un ID de machine caractérisant la machine de filature (1), qui est créé par appel et synthèse d'ID de composants individuels caractérisant les composants respectifs (2a-2e, 3) de la machine de filature (1),
- analyse des données spécifiques à la machine par le dispositif de libération (4),
- sélection de données de libération par le dispositif de libération (4) en fonction des données spécifiques à la machine,
- transmission des données de libération à la machine de filature (1),
- libération de fonctions de machine spécifiques en fonction des données de libération.

2. Procédé selon la revendication précédente, **caractérisé en ce que** les données spécifiques à la machine sont cryptées avant la transmission au dispositif de libération (4) et décryptées à nouveau après la transmission, de préférence par le dispositif de libération (4).

3. Procédé selon l'une des revendications précédentes, **caractérisé en ce que** les données de libération sont cryptées avant la transmission à la machine de filature (1) et décryptées à nouveau après la transmission, de préférence par la machine de filature (1).

4. Procédé selon la revendication 1, **caractérisé en ce que** l'ID de machine est créé avant le fonctionnement régulier de la machine de filature (1) et transmis à une unité de mémoire (7) de la machine de filature (1), sachant que l'ID de machine reste couplé à l'unité de mémoire (7) après la transmission jusqu'à ce que des composants (2a-2e, 3) individuels de la machine de filature (1) soient supprimés, complétés ou modifiés dans une mesure prescrite.

5. Procédé selon l'une des revendications 1 à 4, caractérisé en ce qu'avant la première transmission à l'unité de mémoire (7), l'ID de machine est transmise à une unité de vérification distante de la machine de filature (1), vérifiée et transmise à l'unité de mémoire (7) seulement après le succès de la vérification.

6. Procédé selon l'une des revendications 1 à 5, caractérisé en ce qu'en cas de redémarrage de la machine de filature (1), l'ID de machine actuel est d'abord déterminé, que l'ID de machine actuel est comparé avec l'ID de machine stocké dans l'unité de mémoire (7) et que des fonctions spécifiques de la machine ne sont libérées que si l'ID de machine créé au redémarrage de la machine de filature (1) correspond à l'ID de machine stocké dans l'unité de mémoire (7) ou ne s'écarte de ce dernier que dans une mesure définie au préalable.

7. Procédé selon l'une des revendications 4 à 6, **caractérisé en ce que** l'ID de machine est déterminé par une commande (5) de la machine de filature (1), crypté avant la transmission à l'unité de mémoire (7) et décrypté à nouveau par l'unité de mémoire (7) afin de garantir une transmission sécurisée de l'ID de machine entre la commande (5) et l'unité de mémoire (7).

8. Procédé selon l'une des revendications 4 à 7, **caractérisé en ce que** la commande (5) et l'unité de mémoire (7) s'authentifient réciproquement avant une transmission de données intervenant entre la commande (5) et l'unité de mémoire (7).

9. Procédé selon la revendication précédente, **caractérisé en ce que** l'authentification s'effectue à l'aide d'un procédé Challenge-Response.

10. Procédé selon la revendication 8 ou 9, caractérisé en ce qu'après le succès de l'authentification réciproque, un ID de liaison est créé, à l'aide duquel les échanges de données ultérieurs entre la commande (5) et l'unité de mémoire (7) sont vérifiés.

11. Procédé selon la revendication précédente, **caractérisé en ce que** l'ID de liaison n'est pas modifié tant qu'une liaison existe l'unité de mémoire (7) et la commande (5), et qu'un nouvel ID de liaison est créé selon la revendication précédente si la liaison citée a été interrompue ou si elle doit être rétablie.

12. Procédé selon l'une des revendications précédentes, **caractérisé en ce que** les données spécifiques à la machine, l'ID de machine, les ID de composants et/ou les données de libération sont enregistrés cryptés dans l'unité de mémoire et/ou les données citées ne peuvent être lues que par des unités autorisées.
